# FASCICULE DE BREVET EUROPEEN

(11) **EP 0 323 346 B1**
(45) Date de publication et mention de la délivrance du brevet: **06.04.1994**
(21) Numéro de dépôt: 88403332.5
(22) Date de dépôt: 27.12.1988
(51) Int. Cl.: G11B 11/10

(54) **Milieu magnétooptique d'enregistrement résistant à la corrosion en atmosphère humide**
Magneto-optisches Speichermedium, das korrosionbeständig in einer feuchten Atmosphäre ist
Magneto-optical recording medium resistant to corrosion in a humid atmosphere

(30) Priorité: 30.12.1987 FR 8718355
(43) Date de publication de la demande: 05.07.1989
(73) Titulaire: BULL S.A., 92800 Puteaux (FR)
(72) Inventeur: Bernstein, Pierre, F-78640 Neaphle-Le-Chateau (FR); Roze, Danielle, F-78640 Villiers St Frederic (FR)
(74) Mandataire: Gouesmel, Daniel

(56) Documents cités:
- EP-A- 0 139 474
- EP-A- 0 228 909
- PATENT ABSTRACTS OF JAPAN vol. 11, no. 62 (P-551) 2509, 25 février 1987 & JP-A-61-227243
- PATENT ABSTRACTS OF JAPAN vol. 10, no. 101 (P-447) 2158, 17 avril 1986 & JP-A-60-231936
- PATENT ABSTRACTS OF JAPAN vol. 11, no. 340 (P-634) 2787, 07 novembre 1987 & JP-A-62-121944
- PATENT ABSTRACTS OF JAPAN vol. 12, no. 90 (P-679) 2937, 24 mars 1988 & JP-A-62-222454
- PATENT ABSTRACTS OF JAPAN vol. 10, no. 162 (P-466) 2218, 10 juin 1986 & JP-A-61-016050

## Description

La présente invention concerne un milieu magnétooptique d'enregistrement résistant à la corrosion en atmosphère humide. Elle est plus particulièrement applicable aux mémoires à disques magnétooptiques.

Les mémoires à disques magnétooptiques sont des mémoires où les informations sont enregistrées sur des disques magnétiques et lues par des dispositifs opto-électroniques. L'évolution technologique est telle que l'on tend à utiliser de telles mémoires qui permettent d'obtenir des densités radiales de l'ordre de quelques milliers de pistes par centimètre et des densités longitudinales de 10.000 informations par centimètre.

Le mode de fonctionnement d'une mémoire à disque magnétooptique repose sur l'effet magnétooptique. Ce dernier est caractéristique de certains matériaux magnétiques notamment les alliages comportant un ou plusieurs métaux de la première série de transition (Fe - Co - Vn - Cr - Mn) et un ou plusieurs métaux du groupe des Terres Rares lourds tels que le terbium, le gadolinium, ou encore le dysprosium.

L'effet magnétooptique de tels matériaux concerne l'interaction d'une lumière polarisée rectiligne avec l'état magnétique du matériau, cet interaction pouvant avoir lieu soit par transmission de la lumière à travers le matériau (l'effet magnétooptique est alors appelé effet Faraday), soit par réflexion sur le matériau (l'effet magnétooptique est alors appelé effet Kerr). Cette interaction a pour conséquence la rotation du vecteur champ électrique dans le plan perpendiculaire à la direction de propagation de la lumière. Le sens de cette rotation est fonction de l'état magnétique du matériau (celui-ci étant défini notamment par le sens de l'aimantation à l'endroit où le matériau reçoit la lumière polarisée rectiligne). Pour lire les informations enregistrées sur un milieu magnétique d'enregistrement magnétooptique, il suffit donc de détecter ce sens de rotation du vecteur champ électrique.

De plus amples détails sur l'effet magnétooptique et sur la manière dont peuvent être lues les informations contenues sur les disques magnétiques d'une mémoire magnétooptique sont donnés par exemple dans le brevet français 2.514.913 déposé par la Compagnie Internationale pour l'Informatique CII HONEYWELL BULL le 16 octobre 1981. (Le brevet US correspondant est le brevet 4.510.544).

Les recherches actuelles s'orientent vers l'obtention de milieux magnétooptiques d'enregistrement dont les propriétés sont telles que le rapport signal/bruit du dispositif opto-électronique de lecture associé à ce milieu est élevé. A cet effet, il est par exemple nécessaire que la rotation ϑₖ par effet Kerr, l'indice de réfraction du milieu, sa transparence à la lumière, et sa résistance à la corrosion aussi bien en atmosphère sèche qu'en atmosphère humide, soient les meilleurs possibles.

Par ailleurs, on sait que la plupart des milieux magnètiques d'enregistrement magnétooptique dont la composition est celle indiquée cidessus, ont un inconvénient majeur, à savoir que leurs propriétés magnétiques ne restent pas constantes dans le temps. En particulier, suivant que la teneur de départ X en Terres Rares de l'alliage entre métaux de la première série de transition et Terres Rares lourds est inférieure ou supérieure à une valeur déterminée propre à chaque alliage, appelée composition de compensation X_{comp} , on observe que :
Si X < X_{comp}, le champ coercitif H_{c} du milieu magnétique d'enregistrement diminue avec le temps, alors que,
Si X > X_{comp}, on observe que le champ coercitif H_{c} croit avec le temps puis diminue, après que la teneur X soit devenue inférieure à X_{comp}.

Ce phénomène est gênant car la champ coercitif au milieu magnétique d'enregistrement doit rester compris entre certaines limites, par exemple entre 500 et 1500 10³/4π Am⁻¹ (entre 500 et 1500 oersteds, unité communément employée par l'homme du métier)
Pour simplifier, dans la suite de la description, on appellera cette détérioration des propriétés magnétiques du milieu d'enregistrement magnétooptique au cours du temps, vieillissement du milieu d'enregistrement.

Il est donc clair que les milieux d'enregistrement magnétooptiques que l'on cherche à obtenir doivent présenter une résistance au vieillissement la plus élevée possible, c'est-à-dire qu'ils doivent conserver leurs propriétés magnétiques d'origine sur une période de temps la plus étendue possible.

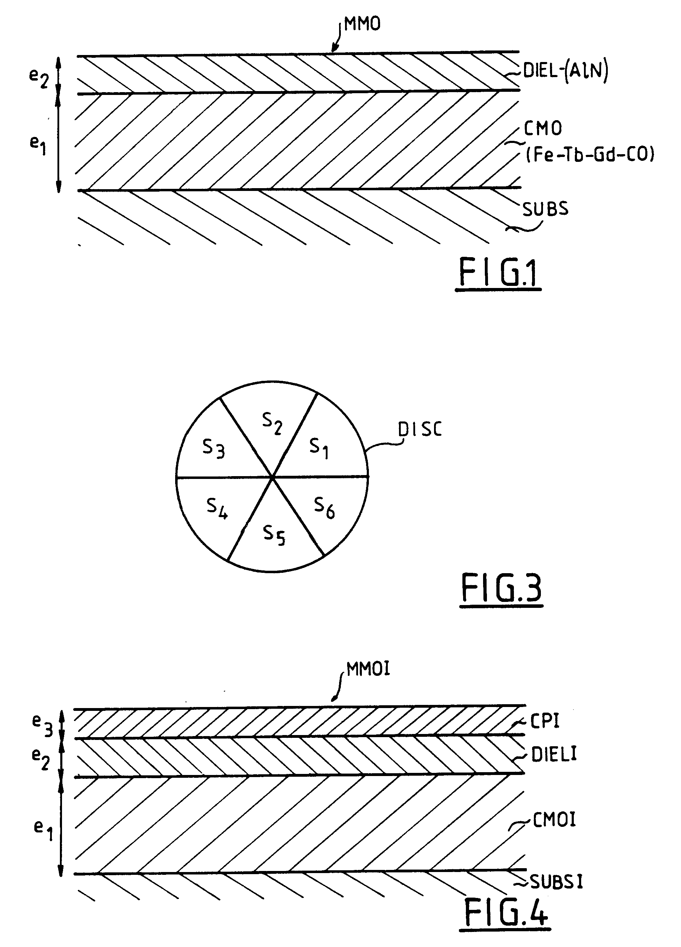

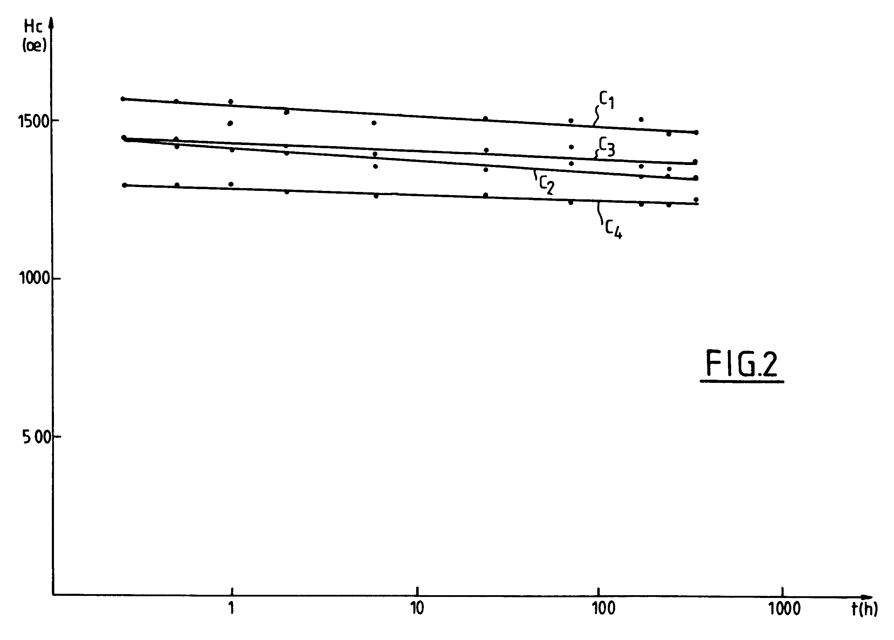

On connaît de tels milieux magnétiques d'enregistrement. L'un d'eux est constitué d'un alliage à base de fer, terbium, gadolinium, cobalt (alliage Fe - Tb -Gd - Co) muni d'une couche de protection en nitrure d'aluminium AlN. Un tel milieu d'enregistrement magnétooptique MMO est représenté à la figure 1. Il comprend donc une couche magnétooptique CMO en alliage Fe - Tb - Gd - Co d'épaisseur e₁ recouverte d'une couche de protection diélectrique DIEL en nitrure d'aluminiun AlN, d'épaisseur e₂ .

De préférence e₁ est de l'ordre de 0,02 à 0,2 micromètre (200 à 2000 Angströms) de l'ordre de quelques centièmes de micromètres (centaines d'angströms), de préférence autour de 0,08 micromètres (800 Angströms). La couche magnétooptique CMO est déposée sur un substrat SUBS.

Les couches CMO et DIEL sont déposées, par exemple, par évaporation sous vide, au moyen d'un canon à électrons, à la température ambiante. Un tel procédé est décrit par exemple dans l'article de M. URNER-WILLE, IEEE, Transaction on Magnetics, MAG - 17 (b) 3214 (1981).

Un tel milieu MMO présente une très bonne résistance au vieillissement, comme le montre les figures C₁, C₂, C₃, C₄, de la figure 2. Chacune de ces courbes montre l'évolution du champ coercitif H_{c} mesuré en oersteds en fonction du temps mesuré en heures.

Ces courbes C₁ à C₄ sont respectivement obtenues pour des températures T₁, T₂, T₃, T₄, égales à 170°C, 205°C, 230°C, 245°C à la pression atmosphérique. On voit que le champ coercitif H_{c} décroît de manière peu significative au cours du temps. Au bout de mille heures de vieillissement, le champ coercitif a décru pour chacune de ses courbes de moins de 100 x 10¾π Am⁻¹ (100 oersteds) par rapport à une valeur de départ comprise entre 1300 et 1600 10¾π Am⁻¹ (1300 et 1600 oersteds)
Du fait des conditions d'expérience indiquées ci-dessus (températures élevées, pression atmosphérique), on peut affirmer que les courbes C₁ à C₄ ont été obtenues en atmosphère sèche.

Le champ coercitif H_{c} mesuré est le champ coercitif magnétooptique qui est obtenu de la manière décrite dans le brevet français 2.560.419 dont le titre est "Milieu d'enregistrement magnétooptique" déposé par la Compagnie Internationale pour l'Informatique CII HONEYWELL BULL le 29 février 1984. (Le numéro du brevet US correspondant est 4.666.789).

Par ailleurs, la couche de protection en nitrure d'aluminium permet d'accroître la rotation par effet Kerr, présente une bonne transparence à la lumière et a de bonnes propriétés mécaniques, comme le montre l'article "Corrosion-resistant protective overcoat for magnetooptical media", 1986 International Magnetics conference (INTERMAG), Phoenix, AZ, USA, 14-17 avril 1986. Dans cet article, le milieu magnétooptique décrit est composé de Fer et de Terbium. La résistance au vieillissement est optimale et est due à la couche en nitrure d'aluminium.

On connaît également un autre milieu d'enregistrement magnétooptique décrit dans le document "Patent Abstract of Japan", Volume 10, N° 162 du 24.03.86. (JP-A-61016050). Ce document décrit une première couche magnéto-optique déposée sur un substrat, elle-même revêtue d'une seconde couche en oxyde du matériau magnétique composant la première couche, cette seconde couche étant elle-même revêtue d'une troisième couche en nitrure d'aluminium ou en dioxyde de silicium.

Le principal inconvénient des milieux d'enregistrement magnétooptique précédents est le suivant:
On a pu observer, qu'en atmosphère humide (de l'ordre de 85 % de degré d'hygrométrie) des points de corrosion apparaissaient au bout de quelques centaines d'heures après la constitution du milieu d'enregistrement, ces points de corrosion se transformant ensuite au bout de quelques autres centaines d'heures en une détérioration complète de la couche de protection de nitrure d'aluminium puis de la couche magnétooptique à l'endroit des points de corrosion.

Ce phénomène physique est d'autant plus désavantageux que les matériels informatiques et notamment les matériels périphériques d'ordinateur dont font partie les mémoires à disques magnétooptiques sont soumis à des normes d'utilisation sévères, et doivent pouvoir fonctionner sans dommage en atmosphère humide.

On connaît un premier milieu d'enregistrement magnéto-optique remédiant aux inconvénients mentionnés ci-dessus. Un tel milieu est par exemple décrit dans la demande de brevet japonais JP-A-61227243. Ce milieu d'enregistrement magnéto-optique se compose d'un substrat et d'un film d'enregistrement magnéto-optique lequel est recouvert successivement d'une première couche diélectrique formée de nitrure d'aluminium et d'une seconde couche de protection formée d'un oxyde. Cet oxyde peut être constitué soit de dioxyde de silicium, soit d'alumine, soit encore de dioxyde de chrome ou de dioxyde de titane.

La présente invention permet également de remédier aux dits inconvénients en évitant la destruction de la couche diélectrique en nitrure d'aluminium et de la couche magnétooptique, en disposant une couche de protection en monooxyde de silicium au-dessus de la couche de nitrure d'aluminium.

Selon l'invention, le milieu magnétique d'enregistrement multicouches qui comprend au moins une couche magnétique formée d'un alliage de Fer-Terbium-Gadolinium-Cobalt et au moins une couche diélectrique en nitrure d'aluminium disposée sur ladite couche magnétique est caractérisé en ce que, dans le but de protéger la couche en nitrure d'aluminium et la couche magnétique de la corrosion en atmosphère humide, il comprend une couche de protection en monooxyde de silicium SiO, et d'épaisseur égale à 0,06 micromètre (600 Angströms) disposée sur la couche en nitrure d'aluminium de telle sorte que cette dernière est disposée entre la couche magnétique et la couche de protection.

La présente invention apparaîtront dans la description suivante en se référant aux dessins annexés.

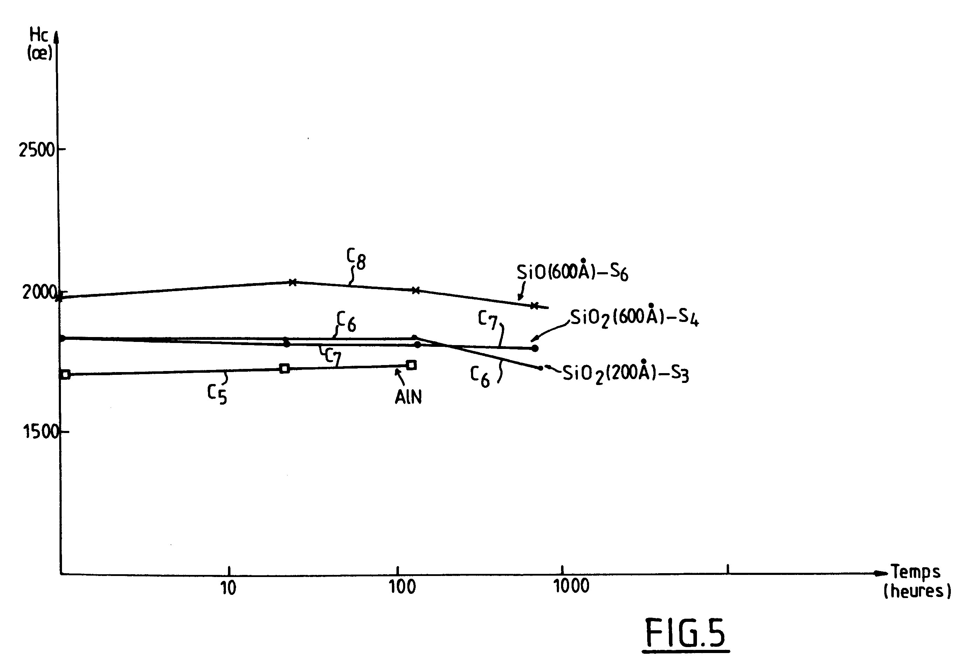

Sur ces dessins :
. La figure 1 montre un milieu magnétooptique d'enregistrement (Fe - Tb - Gd -Co) recouvert d'une couche diélectrique en nitrure d'aluminium,
. La figure 2 est un ensemble de quatre courbes montrant comment évolue le champ coercitif magnétooptique du milieu de la figure 1 en fonction du temps, en atmosphère sèche,
. La figure 3 montre un disque magnétooptique comprenant six secteurs comprenant chacun une couche de protection différente du milieu d'enregistrement magnétooptique MMO de la figure 1 en vue de tester la corrosion de chacun de ces secteurs en atmosphère humide,
. La figure 4 montre le milieu magnétooptique d'enregistrement selon l'invention,
. La figure 5, conposée des courbes C₅, C₆, C₇, C₈ montre l'évolution du champ coercitif magnétooptique H_{c} de différents milieux magnétooptiques d'enregistrement tels que ceux de la figure 1, recouverts chacun d'une couche de protection différente.

Ainsi qu'il a été dit plus haut, le milieu MMO montré à la figure 1, subit des détériorations en atmosphère humide (de l'ordre de 85 % de degrés d'humidité). Ces détériorations pouvant aller jusqu'à la destruction complète du film magnétooptique au bout de plusieurs centaines d'heures d'existence de ce dernier. On observe que la couche de protection en nitrure d'aluminium est d'abord détruite localement en une pluralité de points, et qu'ensuite cette destruction s'étend à l'ensemble du milieu magnétooptique d'enregistrement.

Bien qu'il soit difficile, sinon impossible expérimentalement d'établir le phénomène physico-chimique qui produit cette détérioration, l'hypothèse la plus vraisemblable est qu'il se produit la réaction chimique suivante :

AlN + 2H₂O ------> AlOOH + NH₃

Ce phénomène de corrosion est donc dû exclusivement au comportement du nitrure d'aluminium en atmosphère humide et n'est pas lié à la composition de l'alliage formant le matériau magnétooptique, ni à sa structure. Il est donc évident que des phénomènes de corrosion analogues peuvent se produire si le matériau magnétooptique a une structure multicouches, par exemple quadricouches, ces milieux multicouches étant bien connus et par exemple décrits dans l'article de G. A. N. CONNEL, R. ALLEN, et M. MANSURIPUR, ayant pour titre "interference enhanced Kerr spechoscopy for very thin absorbing films applications to amorphous terbium-iron" publié dans le Journal of Magnetism and Magnetic Materials N° 35 de 1983, de la North Holland Publishing Company.

Pour remédier au phénomène de corrosion du milieu magnétooptique comportant une couche de protection de nitrure d'aluminium, diverses couches de protection ayant une composition physico-chimique différente ont été envisagées pour recouvrir la couche de nitrure d'aluminium. Le comportement de ces différentes couches de protection a été étudié pendant une durée de l'ordre de 1000 heures, (après constitution du milieu magnétooptique), notamment en ce qui concerne la résistance à la corrosion par l'humidité, d'une part, et en ce qui concerne le vieillissement magnétique d'autre part.

Le dispositif expérimental utilisé est représenté à la figure 3. Il consiste en un disque dont le milieu magnétooptique d'enregistrement est analogue au milieu MMO représenté à la figure 1, et qui a été recouvert en différents secteurs soit par de l'alumine AL₂O₃, soit par du dioxyde de silicium SiO₂, soit par du monooxyde de silicium SiO. Le nombre de secteurs choisis a été de six. Ces différents secteurs ont été déposés par évaporation sous vide au moyen d'un canon à électrons par exemple de la manière indiquée plus haut (article de M. URNER-WILLE) à une vitesse de dépot de 0,0003 micromètres (3 angstroems) par seconde. Après qu'ils aient été déposés, chacun des six secteurs S₁, S₂, ......, S₆ a été découpé pour constituer autant d'échantillons dont les capacités de résistance à la corrosion par l'humidité et au vieillissement magnétique ont été analysés.

Les secteurs S₁ et S₂ ont été revêtus chacun d'une couche de protection d'alumine, dont l'épaisseur est respectivement de 0,02 et 0,06 micromètre (200 et 600 Angströms)
Les deux secteurs S₃ et S₄ sont revêtus d'une couche de protection en dioxyde de silicium SiO₂, dont l'épaisseur est respectivement de 0,02 et 0,06 micromètre (200 et 600 Angströms)
Les deux secteurs S₅ et S₆ sont revêtus d'une couche de protection en monooxyde de silicium SiO, d'épaisseurs respectives égales à 0,02 et 0,06 micromètre . (200 et 600 Angströms)
La procédure expérimentale d'analyse de la résistance à la corrosion et de la résistance au vieillissement magnétique a été conduite en effectuant des observations optiques de l'aspect des différents secteurs S₁ à S₆ au cours du temps d'une part, et d'autre part en mesurant le champ coercitif magnétooptique par observation du cycle d'hystérésis magnétooptique, selon la méthode indiquée dans le brevet français 2.560.419 précité.

### A/ Résultats obtenus avec le milieu magnétooptique Fe - Tb - Gd - Co/AlN recouvert avec de l'alumine (secteur S₁ et S₂) :

Il n'a pas été possible d'obtenir le cycle d'hystérésis magnétooptique pour les secteurs S₁ et S₂. Au bout de 720 heures de soumission des échantillons S₁ et S₂ à une atmosphère humide, des points de corrosion sont apparus sur chacun de ces échantillons. Au bout de 1000 heures de soumission à la corrosion par l'humidité, l'échantillon S₂ a montré plusieurs trous dus à la corrosion et S₁ un nombre encore plus grand. En conclusion, on voit qu'il est impossible de retenir l'alumine Al₂O₃ comme élément constituant une couche de protection du milieu d'enregistrement MMO représenté à la figure 1.

### B/ Résultats obtenus avec un milieu d'enregistrement magnétooptique Fe - Tb - Gd - Co /AlN protégé avec du dioxyde de silicium (Secteurs S₃ et S₄) :

Au bout de 1000 heures de soumission à la corrosion en atmosphère humide, il n'a été noté aucun changement significatif dans le champ coercitif H_{c} mesuré aussi bien pour les secteurs S₃ et S₄. Ceci est illustré à la figure 5, aux courbes C₆ et C₇ qui représentent respectivement l'évolution au cours du temps du champ coercitif H_{c} des échantillons S₃ et S₄. On note cependant qu'au bout de mille heures de fonctionnement, le champ coercitif H_{c} de l'échantillon S₃ subit une légère décroissance par rapport à la valeur que ce champ coercitif a dès que l'échantillon est constitué ou au bout de quelques dizaines d'heures de fonctionnement.

On peut conclure qu'une couche de protection en dioxyde de silicium SiO₂ de 0,06 micromètre d'épaisseur assure une protection plus efficace qu'une couche de protection de même nature ayant une épaisseur inférieure, à savoir 200 angströms.

A noter que sur cette même figure 5 on a représente la courbe représentative de la variation du champ coercitif H_{c} d'un milieu magnétooptique tel que celui montré à la figure 1, mais dépourvu de couche de protection supplémentaire telle que celle constituant les secteurs S₁ à S₆. On voit que pour cette courbe C₅, aucune mesure n'a pu être effectuée pour plusieurs centaines d'heures en atmosphère humide, puisque ainsi qu'il a été indiqué plus haut, un tel milieu est détruit par la corrosion due à l'humidité au bout de plusieurs centaines d'heures de fonctionnement et qu'il est donc impossible d'en mesurer le champ coercitif.

### C/ Résultats obtenus avec un milieu d'enregistrement magnétooptique Fe - Tb - Gd - Co/AlN recouvert d'une couche de protection en monooxyde de silicium (Secteurs S₅ et S₆) :

La courbe de variation du champ coercitif du secteur S₆ a été établie et l'on peut constater (figure C₈ à la figure 5) qu'il n'y a pratiquement aucun changement dans la valeur du champ coercitif au cours du temps quelle que soit la durée de soumission de cet échantillon à la corrosion en atmosphère humide. Aucune trace de corrosion n'a été décelée sur les échantillons S₅ et S₆.

En conclusion, on voit qu'un milieu d'enregistrement magnétooptique tel que MMO, recouvert d'une couche de protection en dioxyde ou monooxyde de silicium d'une épaisseur de 0,06 micromètre (600 Angströms) offre une excellente protection contre la corrosion par l'humidité. En ce qui concerne le dioxyde de silicium, des épaisseurs de 0,02 micromètre (200 Angströms) sont également possibles. Bien entendu, l'épaisseur optimale des couches de protection SiO ou SiO₂ doit être ajustée pour obtenir le meilleur signal de lecture possible, c'est-à-dire avoir le meilleur rapport signal/bruit.

On considère la figure 4 qui représente un mode préféré de réalisation du milieu magnétooptique d'enregistrement selon l'invention.

Ce milieu MMOI comprend :
- Le substrat SUBI analogue au substrat SUBS de la figure 1,
- Une couche magnétooptique d'enregistrement CMOI analogue à la couche CMO de la figure 1, tant en ce qui concerne la composition que l'épaisseur,
- Une couche diélectrique DIELI analogue à la couche DIEL de la figure 1, tant en ce qui concerne la composition que l'épaisseur,
- Une couche de protection CPI réalisée soit en monooxyde de silicium SiO, soit en dioxyde de silicium SiO₂. L'épaisseur e₃ de cette couche CPI est au minimum de 0,02 micromètre (200 Angströms) et de préférence comprise entre 0,02 et 0,06 micromètre (200 et 600 Angströms) pour une couche de protection CPI en dioxyde de silicium, la valeur préférée se situant aux alentours de 0,06 micromètre (600 Angströms) dans les deux cas.

Un disque magnétooptique ayant un milieu d'enregistrement Fe - Tb - Gd - Co/AlN recouvert d'une couche de protection en dioxyde de silicium SiO2 de 600 angströms d'épaisseur et d'une couche de lubrification adéquate a été réalisé et a permis de constater que des têtes d'enregistrement comprenant des transducteurs magnétiques d'enregistrement ont pu voler dans des conditions tout-à-fait normales à une distance de l'ordre de quelques dixièmes de microns de ce disque et ce, pendant au moins deux semaines. On a pu observer également que ces têtes ont pu atterrir ou décoller sur le disque (lors de l'arrêt ou lors de la mise en route du disque) sans problème apparent (il s'agit des têtes dites "à décollage" qui sont bien connues de l'homme du métier dans le domaine de l'enregistrement sur disques magnétiques appartenant à des mémoires à disques). Il convient de remarquer que l'utilisation de têtes à décollage est difficile, voire impossible pour des milieux d'enregistrement magnétooptiques tels que celui de la figure 1.

## Revendications

1. Milieu magnétique d'enregistrement (MMOI) multicouches comprenant au moins une couche magnétique (CMOI) formée d'un alliage de Fer-Terbium-Gadolinium-Cobalt et au moins une couche diélectrique (DIELI) en nitrure d'aluminium disposée sur ladite couche magnétique, caractérisé en ce que, dans le but de protéger la couche en nitrure d'aluminium et la couche magnétique de la corrosion en atmosphère humide, il comprend une couche de protection (CPI) en monooxyde de silicium SiO, et d'épaisseur égale à 0,06 micromètre (600 Angströms) disposée sur la couche en nitrure d'aluminium de telle sorte que cette dernière est disposée entre la couche magnétique et la couche de protection.

## Claims

1. A multi-layer magnetic recording medium (MMOI) comprising at last one magnetic layer (CMOI) formed of an Iron/Terbium/Gadolinium/Cobalt alloy and at least one dielectric layer (DIELI) made of aluminium nitride arranged on said magnetic layer, characterised in that, with the aim of protecting the layer made of aluminium nitride and the magnetic layer from corrosion in a humid atmosphere, it comprises a protective layer (CPI) made of silicon monoxide SiO, with a thickness equal to 0.06 micrometres (600 Angström), arranged on the layer of aluminium nitride such that the latter is arranged between the magnetic layer and the protective layer.

## Patentansprüche

1. Mehrschichtiges magnetisches Speichermedium (MMOI) mit mindestens einer magnetischen Schicht (CMOI) aus einer Eisen-Terbium-Gadolinium-Kobalt-Legierung und mindestens einer auf der magnetischen Schicht angeordneten dielektrischen Schicht (DEILI) aus Aluminiumnitrid, dadurch gekennzeichnet, daß es zum Schutz der Aluminiumnitridschicht und der magnetischen Schicht vor Korrosion in feuchter Atmosphäre eine Schutzschicht (CPI) aus Siliciummonoxid SiO in einer Dicke von 0,06 µm (600 Å) aufweist, die auf der Aluminiumnitridschicht so angeordnet ist, daß letztere zwischen der magnetischen Schicht und der Schutzschicht liegt.
